# EUROPÄISCHE PATENTANMELDUNG

(11) **EP 4 750 018 A1**
(43) Veröffentlichungstag der Anmeldung: **27.05.2026**
(21) Anmeldenummer: 25214980.2
(22) Anmeldetag: 11.11.2025
(51) Int. Cl.: H04L 41/14, H04L 43/02, H04L 43/08, H04L 12/40, G05B 19/418, H04L 41/022, H04L 41/0226, H04L 41/0253, H04L 43/028

(54) **VERFAHREN ZUR ÜBERWACHUNG DER KOMMUNIKATION ZWISCHEN EINEM FELDBUS UND EINEM SUB-BUS-MODUL**

(30) Priorität: 26.11.2024 DE 102024134874
(71) Anmelder: Murrelektronik GmbH, 71570 Oppenweiler (DE)
(72) Erfinder: Seidel, Jens, Delitzsch (DE)
(74) Vertreter: Stock, Johannes

(57) **Zusammenfassung**

Die Erfindung betrifft ein Verfahren zur Überwachung der Kommunikation zwischen einem Feldbus (1) und einem Sub-Bus-Modul (20), wobei über den Feldbus (1), einen Sub-Bus (2) und einen Sub-Bus-Master (10) das Sub-Bus-Modul (20) über einen Sub-Bus-Stack (30) angesteuert wird. Um sporadisch oder selten auftretende Fehler sicher zu detektieren wird in der Feldebene des Sub-Bus-Stacks (30) die Daten des Sub-Bus-Stacks (30) abgegriffen und über ein Kommunikationsmodul (50) einer Speicher- und/oder Auswerteeinheit (60) zugeführt.

## Beschreibung

Die Erfindung betrifft ein Verfahren zur Überwachung der Kommunikation zwischen einem Feldbus und einem Sub-Bus-Modul.

Moderne Fertigungsanlagen werden über einen zentralen Feldbus gesteuert, der über Sub-Bus-Master Sub-Bus-Module ansteuert. Derartige Sub-Bus-Module können beispielhaft als Aktoren und/oder Sensoren ausgebildet sein.

In der Praxis können Störungen der Kommunikation zwischen dem Feldbus und einem Sub-Bus-Modul nicht vollständig ausgeschlossen werden. Treten Störungen auf, kann dies zu fehlerhaften Bedienungen der Aktoren und/oder zu verzögerten oder fehlenden Sensorsignalen führen. Dies kann zu einer fehlerhaften Umsetzung eines vom Feldbus zum Sub-Bus-Modul oder in Gegenrichtung übermittelten Datenprotokolls führen.

Treten Störungen oder Fehlfunktionen auf, werden in der Praxis Messvorrichtungen wie zum Beispiel ein Protokoll-Analyzer in eine Leitung eingeschleift, was jedoch einen Stillstand des Systems erfordert. Ein Stillstand des Systems führt aber in vielen Fällen auch zu einem Reset der Steuerung selbst, wodurch ein aufgetretener Fehler in der Regel zurückgesetzt wird und damit nicht mehr erkennbar ist.

Eine besondere Problematik betrifft nur sporadisch auftretende Fehler, die erst nach längerer Betriebszeit mit einer eingeschleiften Messvorrichtung detektierbar sind. Das System muss nach dem Einschleifen der Messvorrichtung über eine lange Betriebsdauer betrieben werden, um sporadische oder selten auftretende Fehler überhaupt feststellen zu können.

Der Erfindung liegt die Aufgabe zugrunde ein Verfahren anzugeben, mit dem auch sporadisch oder selten auftretende Fehler sicher detektierbar sind, ohne dass ein Stillstand des Systems notwendig ist.

Die Aufgabe wird nach den Merkmalen des Anspruchs 1 gelöst. Das über den Feldbus und einen Sub-Bus-Master angesteuerte Sub-Bus-Modul wird über einen Sub-Bus-Stack angesteuert. Nach der Erfindung ist vorgesehen, in der Feldebene des Sub-Bus-Stacks die Daten des Sub-Bus-Stacks abzugreifen und die abgegriffenen Daten über ein Kommunikationsmodul einer Speicher-und/oder Auswerteeinheit zuzuführen.

Im laufenden Betrieb des Systems werden somit Daten auf der Feldebene des Sub-Bus-Stack abgegriffen und insbesondere zentral abgespeichert. Tritt ein sporadischer Fehler auf, können die abgegriffenen und gespeicherten Daten ausgelesen und über die Auswerteeinheit ausgewertet werden. Ohne Stillstand des Systems können somit auch sporadische Fehler sicher festgestellt und korrigierend in das System eingegriffen werden.

Der Feldbus wird mit einem Feldbusprotokoll betrieben und der Sub-Bus mit einem Sub-Bus-Protokoll. Das Feldbusprotokoll ist unterschiedlich zum Sub-Bus-Protokoll ausgebildet.

Das Feldbusprotokoll ist als Ethernet Protokoll vorgesehen, während das Sub-Bus-Protokoll als IO-Link-Protokoll, HART-Protokoll oder CAN-Protokoll ausgebildet ist.

Das IO-Protokoll ist serielles Punkt-zu-Punkt-Kommunikationsprotokoll für den Anschluss von Sensoren und Aktoren an ein Automatisierungssystem. Die Standardisierung umfasst sowohl die elektrischen Anschlussdaten als auch ein digitales Kommunikationsprotokoll (IO-Link-Protokoll), über das die Sensoren und Aktoren mit dem Automatisierungssystem in Datenaustausch treten.

HART (Highway Addressable Remote Transducer) ist ein Kommunikationsstandard für Feldgeräte und Teil der Feldbus-Norm IEC 61158. Der HART-Standard erweitert das analoge 4 bis 20 mA-Signal um aufmodulierte, digitale Signalübertragung.

Das CAN-Protokoll (Controller Area Network) ist ein nachrichtenbasiertes Protokoll, um elektronischen Steuergeräte (ECUs) und andere Geräte zuverlässig miteinander kommunizieren zu lassen.

In besonderer Ausgestaltung der Erfindung erfolgt der Abgriff der Daten über eine Sniffer Applikation. Die Sniffer Applikation ist als Softwareprogramm vorgesehen und verfolgt permanent den Datenverkehr zwischen dem Sub-Bus-Master und dem Sub-Bus-Modul auf der Basis des Sub-Bus-Stacks. Dabei ist vorgesehen, dass die Applikation ausschließlich mit einer Leseberechtigung auf einen Sub-Bus-Stack zugreift. Änderungen des Sub-Bus-Stack über den Sniffer sind somit ausgeschlossen.

Der Sub-Bus-Stack ist vorteilhaft in Schichten aufgebaut, vorzugsweise in Schichten nach dem OSI-Modell (Open Systems Interconnection model). Das OSI-Modell ermöglicht eine Kommunikation über unterschiedlichste technische Systeme hinweg. Dazu definiert das Modell sieben übereinanderliegende Schichten (layers) mit jeweils eng begrenzten Aufgaben. Daher spricht man auch von OSI-Layern.

Die Daten des Sub-Bus-Stacks werden zwischen den einzelnen Schichten abgegriffen, insbesondere nach dem Physical Layer und/oder dem Link-Layer und oder dem Netzwerk-Layer. Diese abgegriffenen Daten werden über den Feldbus einer Speicher- und/oder Auswerteeinheit zugeführt. Bevorzugt werden die abgegriffenen Daten in einer Cloud abgespeichert.

Um die abzuspeichernde Datenmenge zu reduzieren, kann die Abspeicherung der abgegriffenen Daten nach unterschiedlichen Kriterien erfolgen. So kann eine Abspeicherung in Abhängigkeit eines auftretenden Events erfolgen, also Event-basiert sein. Eine weitere Möglichkeit ist, die Abspeicherung der Daten mittels eines Triggers auszuführen, also Trigger-basiert. Auch kann es vorteilhaft sein, wenn die abgegriffenen Daten gefiltert abgespeichert werden, d. h., die Datenmenge über einen Filter reduziert wird.

Die in der Speichereinheit abgelegten Daten werden zur Analyse vorteilhaft über eine Datei oder eine WEB-Applikation abgerufen.

Eine bevorzugte Schnittstelle zum Abgriff von Daten aus einer Kommunikation zwischen einem Feldbus und einem Sub-Bus-Modul nach einem der vorhergehenden Ansprüche ist auf der Feldebene zwischen dem Sub-Bus-Master und dem Sub-Bus-Modul vorgesehen. Das Sub-Bus-Modul ist über einen Sub-Bus-Master an den Feldbus angeschlossen.

Weitere Merkmale der Erfindung ergeben sich aus den weiteren Ansprüchen, der Beschreibung und der Zeichnung. Die in den Ansprüchen, der Beschreibung und der Zeichnung offenbarten Merkmale können zur Beschreibung der Erfindung miteinander insbesondere beliebig kombiniert werden.

### Die Zeichnungen zeigen:

- Fig. 1: in schematischer Darstellung den Aufbau eines an einem Feldbus betriebenen Sub-Bus-Masters für ein Sub-Bus-Modul,
- Fig. 2: in schematischer Darstellung die Funktion einer Sniffer Applikation in einem Sub-Bus-Master zur Ansteuerung eines Sub-Bus- Moduls.

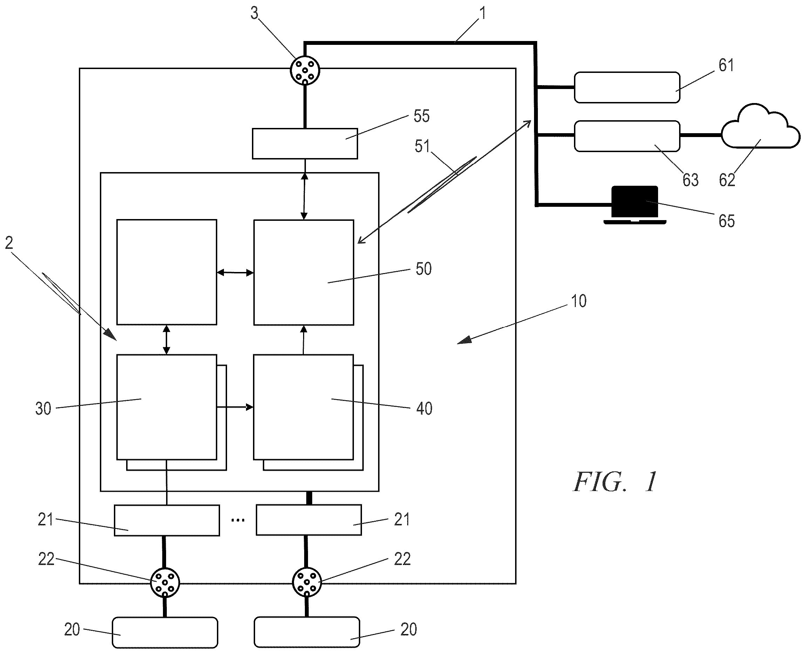

In Fig. 1 ist ein nach oben an einen Feldbus 1 angeschlossener Sub-Bus-Master 10 dargestellt, der nach unten Sub-Bus-Module 20 über einen Sub-Bus-Stack 30 und einen entsprechenden physikalischen Treiber 21 ansteuert. Der Feldbus Anschluss 3 und/oder die physikalischen Anschlüsse 22 der Sub-Bus-Module 20 können über Klemmen oder über Steckverbinder (M8 oder M12) - wie beispielhaft dargestellt - ausgeführt sein. Das ein Sub-Bus-Modul 20 ansteuernde elektrische Signal wird über den Treiber 21 aufbereitet und dem Sub-Bus-Modul 20 zugeführt.

Auf der Feldebene des Sub-Bus-Stacks 30 greift eine Sniffer Applikation 40 auf dem Sub-Bus 2 übermittelten Daten ab, ohne diese zu verändern. Die Sniffer Applikation 40 greift ausschließlich mit einer Leseberechtigung auf die Daten des Sub-Bus-Stacks 30 zu. Die von der Sniffer Applikation 40 abgegriffenen Daten werden über ein Kommunikationsmodul 50 einer Speicher- und/oder Auswerteeinheit 60 zugeführt. Dabei werden die abgegriffenen Daten über den Feldbus 1 einer Speicher-und/oder Auswerteeinheit 60 zugeführt. In Fig. 1 ist ein Speicher 61 gezeigt, der unmittelbar Daten aus dem Feldbus 1 empfängt und abspeichert. Es kann auch vorteilhaft sein, die abgegriffenen Daten z. B. über einen WEB-Browser 63 in einer Cloud 62 abzulegen. Die Auswertung bzw.

Analyse der abgegriffenen Daten aus dem Speicher 61 oder der Cloud 62 erfolgt vorteilhaft über eine Datei und/oder über eine WEB Applikation. Zweckmäßig erfolgt die Auswertung über einen PC, Laptop 65, Tablet oder dergleichen elektronische Einheit.

Alternativ können die abgegriffenen Daten auch über eine drahtlose Schnittstelle 51 der Speicher-und Auswerteeinheit 60 zugeführt werden. Dadurch kann der Datenverkehr auf dem Feldbus 1 reduziert werden.

Der Feldbus 1 wird mit einem Feldbusprotokoll und der Sub-Bus 2 mit einem Sub-Bus-Protokoll betrieben. Dabei ist vorgesehen, dass das Feldbusprotokoll einen anderen Aufbau hat als das Sub-Bus-Protokoll. Das Feldbus Protokoll und das Sub-Bus-Protokoll sind unterschiedlich. Zweckmäßig ist das Feldbus Protokoll als Ethernet Protokoll ausgebildet. Das Sub-Bus-Protokoll ist bevorzugt ein IO-Link-Protokoll. Es kann zweckmäßig sein, das Sub-Bus-Protokoll als HART-Protokoll oder CAN-Protokoll vorzusehen.

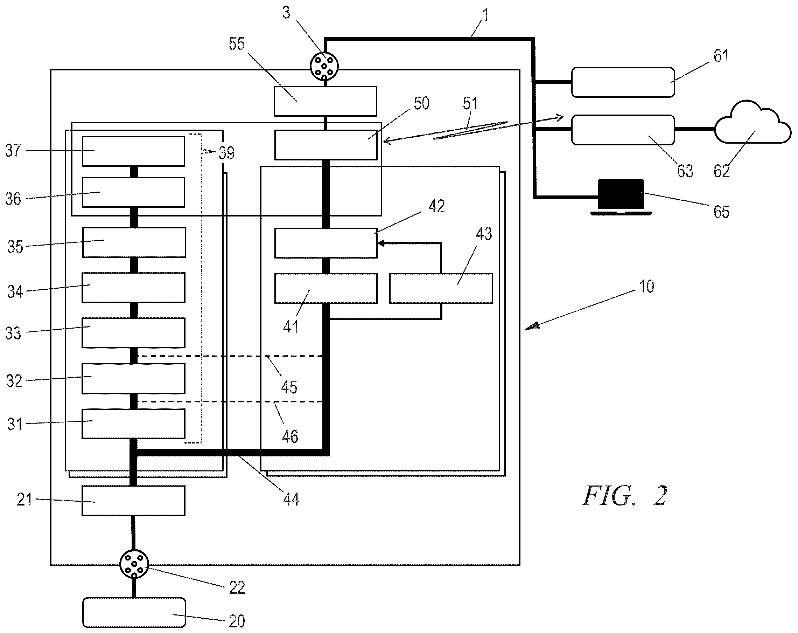

In Fig. 2 ist in schematischer Darstellung die Funktion einer Sniffer Applikation 40 in einem Sub-Bus-Master 10 zur Ansteuerung eines Sub-Bus-Moduls 20 wiedergegeben. Der Sub-Bus-Stack 30 ist in Schichten 31 bis 37 aufgebaut, vorzugsweise in Schichten nach dem OSI-Modell. Die Sniffer Applikation 40 greift die Daten zwischen den einzelnen Schichten des Sub-Bus-Stack 30 ab. Bevorzugt erfolgt der Abgegriff nach dem Physical Layer 31 und/oder dem Data Link Layer 32 und/oder dem Netzwerk Layer 33.

In Fig. 2 ist der Datenabgriff nach dem Physiker Layer 31 gezeigt. Die Sniffer Applikation 40 loggt die Daten mit und übermittelt diese über eine Kommunikationseinheit 50 und den Feldbus 1 an einen Speicher 61 oder eine Cloud 62. Vor einer Speicherung der abgegriffenen Daten in einen vorgeschalteten Datenbuffer 42 können diese über einen Filter 41 in der Datenmenge reduziert werden. Es kann auch zweckmäßig sein, die Speicherung der abgegriffenen Daten Event-basiert oder Trigger-basiert vorzunehmen. In Fig. 2 ist ein Trigger 43 für eine Trigger-basierte Speicherung der abgegriffenen Daten dargestellt.

Der Sub-Bus-Stack 30 weist nach dem OSI Modell wie folgt sieben Schichten 39 (Layer) auf, nämlich
Layer 1 - Bitübertragungsschicht (Physical Layer 31)
Layer 2 - Sicherungsschicht (Data Link Layer 32)
Layer 3 - Vermittlungsschicht (Network Layer 33)
Layer 4 - Transportschicht (Transport Layer 34)
Layer 5 - Sitzungsschicht (Session Layer 35)
Layer 6 - Darstellungsschicht (Presentation Layer 36)
Layer 7 - Anwendungsschicht (Application Layer 37)

Der Abgriff der Daten erfolgt bevorzugt nach dem Physical Layer 31, wie die durchgezogene Linie 44 zeigt. Es kann auch zweckmäßig sein, die Daten nach dem Data Link Layer 32 oder nach dem Network Layer 33 abzugreifen, wie die strichlierten Linien 45 und 46 in Fig. 2 andeuten.

Nach der Erfindung wird innerhalb eines Feldbusmasters auf einer möglichst niedrigen Ebene des nach dem OSI Model aufgebauten Sub-Bus-Stack 30 einen Abgriff der Daten zu schaffen und diese dann in einen Speicher (z. B. Data Buffer 42) zu schreiben. Vorteilhaft ist der Abgriff der Daten zwischen der Ebene des Physical Layers 31 und dem Data Link Layer 32. An dieser Stelle des Sub-Bus-Stacks 30 steht eine große Informationsbreite zur Verfügung. So kann z.B. das zeitliche Verhalten, wie z. B. Pausen zwischen den Bytes, nur auf der Ebene des Physical Layers 31 ermittelt werden. Der Abgriff der Daten auf einer möglichst niedrigen Ebene hat den Vorteil, dass die Daten nicht durch Implementierungsfehler eines höheren Layers verfälscht werden.

Der in Fig. 2 dargestellte Data Buffer 42 kann z. B. als Ringpuffer ausgeführt sein, der sich bei einem Überlauf umbricht. So können immer die zuletzt erfassten Daten ausgelesen werden. Ebenso kann ein Ringpuffer, der sich beim Überlauf nicht überschreibt, zweckmäßig sein. Wie ferner in Fig. 2 dargestellt, kann vorteilhaft für die im Data Buffer 42 zu speichernden Daten Filter 41 gesetzt werden.

Die Funktionsweise des Data Buffer 41 kann auch an einen Trigger 43 gekoppelt sein. So kann z. B. bei Eintreten eines vorgegebenen, bestimmten Ereignisses die Speicherung der Daten im Data Buffer 41 aktiviert oder auch die Speicherung angehalten werden.

Die gespeicherten Daten können unabhängig von der Funktion des Feldbusmasters ausgelesen und bewertet werden.

Es kann vorteilhaft sein, wenn das Feldbusgerät selbst eine Auswerteeinheit zur Interpretation der abgespeicherten Daten umfasst. So kann es vorteilhaft sein, z. B. die Auswertung über eine Webseite im Feldbusgerät anzubieten. Eine weitere Möglichkeit ist, die gespeicherten Daten aus dem Feldbusgerät herunterzuladen und in einem separaten Tool auszuwerten.

Zweckmäßig wird von dem Feldbusgerät dem Nutzer über einen Diagnose Laptop 65 oder eine HMI (Human Machine Interface) Schnittstelle eine Software zur Auswertung der gespeicherten Daten zur Verfügung gestellt. Dieses kann vorteilhaft in Java Skript geschrieben sein. So kann der Programmcode direkt in einen Web-Browser ausgeführt werden. Derselbe Programmcode ist auch als Stand Alone Lösung umzusetzen.

Insbesondere erfolgt der Mittschnitt der zu speichernden Daten in einen Standard Format [PCAP (Packet Capture) o. PCAPNG (PCAP Next Generation) welches von Wireshark^{™} mit einem angepassten Dissector ausgewertet werden kann]. Vorteilhaft werden bei einem Download der Daten diese in das PCAP / PCAPNG Format konvertiert. Die heruntergeladenen Daten können dann Standard Software ausgewertet werden.

Werden durch die Sniffer Applikation 40 Kommunikationsfehler detektiert, kann der Mittschnitt der Daten bzw. der IO-Link Kommunikation separat gespeichert werden. Dieses hat den Vorteil, dass bei sporadisch auftretenden Fehlern auch vorangehende Fehler sichtbar gemacht werden können. So wiederholt ein IO-Link Protokoll im Fehlerfall einen Layer dreimal. Läuft eine Anlage nicht stabil, so sind die Aufzeichnungen von vorangehenden Fehlverhalten eine wertvolle Hilfe bei der Fehlersuche.

## Patentansprüche

1. Verfahren zur Überwachung der Kommunikation zwischen einem Feldbus (1) und einem Sub-Bus-Modul (20),
a) wobei über den Feldbus (1), einen Sub-Bus (2) und einen Sub-Bus-Master (10) das Sub-Bus-Modul (20) über einen Sub-Bus-Stack (30) angesteuert wird,
b) und in der Feldebene des Sub-Bus-Stacks (30) die Daten des Sub-Bus-Stacks (30) abgegriffen werden,
c) und die abgegriffenen Daten über ein Kommunikationsmodul (50) einer Speicher- und/oder Auswerteeinheit (60) zugeführt werden.

2. Verfahren nach Anspruch 1,
**dadurch gekennzeichnet, dass** der Feldbus (1) mit einem Feldbusprotokoll und der Sub-Bus (2) mit einem Sub-Bus Protokoll betrieben werden, wobei das Feldbusprotokoll unterschiedlich zum Sub-Bus Protokoll ist.

3. Verfahren nach Anspruch 2,
**dadurch gekennzeichnet, dass** das Feldbusprotokoll als Ethernet Protokoll ausgebildet und das Sub-Bus Protokoll als IO-Link Protokoll, HART-Protokoll oder CAN-Protokoll ausgebildet ist.

4. Verfahren nach einem der Ansprüche 1 bis 3,
**dadurch gekennzeichnet, dass** der Abgriff der Daten über eine Sniffer Applikation (40) erfolgt.

5. Verfahren nach Anspruch 4,
**dadurch gekennzeichnet, dass** die Sniffer Applikation (40) ausschließlich mit einer Leseberechtigung auf die Daten des Sub-Bus-Stacks (30) zugreift.

6. Verfahren nach Anspruch 1,
**dadurch gekennzeichnet, dass** der Sub-Bus-Stack (30) in Schichten (39) aufgebaut ist, vorzugsweise in Schichten (39) nach dem OSI-Modell.

7. Verfahren nach Anspruch 1,
**dadurch gekennzeichnet, dass** die Daten zwischen den einzelnen Schichten (39) des Sub-Bus-Stacks (30) abgegriffen werden, insbesondere nach dem Physical Layer (31) und/oder dem Data Link Layer (32) und/oder dem Network Layer (33).

8. Verfahren nach Anspruch 1,
**dadurch gekennzeichnet, dass** die abgegriffenen Daten über den Feldbus (1) der Speicher- und/oder Auswerteeinheit (60) zugeführt werden.

9. Verfahren nach Anspruch 1,
**dadurch gekennzeichnet, dass** die abgegriffenen Daten über eine drahtlose Schnittstelle (51) der Speicher- und/oder Auswerteeinheit (60) zugeführt werden.

10. Verfahren nach Anspruch 1,
**dadurch gekennzeichnet, dass** die abgegriffenen Daten in einer Cloud (62) abgespeichert werden.

11. Verfahren nach Anspruch 1,
**dadurch gekennzeichnet, dass** die Speicherung der abgegriffenen Daten Event-basiert, Trigger-basiert und/oder gefiltert erfolgt.

12. Verfahren nach Anspruch 1,
**dadurch gekennzeichnet, dass** die abgegriffenen Daten aus dem Speicher (61) über eine Datei und/oder über eine WEB-Applikation zur Analyse abgerufen werden.

13. Schnittstelle zum Abgriff von Daten aus einer Kommunikation zwischen einem Feldbus (1) und einem Sub-Bus-Modul (20) nach einem der vorhergehenden Ansprüche, wobei das Sub-Bus-Modul (20) über einen Sub-Bus-Master (10) an den Feldbus (1) angeschlossen ist, und die Schnittstelle zum Datenabgriff auf der Feldebene zwischen dem Sub-Bus-Master (10) und dem Sub-Bus-Modul (20) vorgesehen ist.
